# EUROPEAN PATENT APPLICATION

(11) **EP 4 725 292 A1**
(43) Date of publication of application: **15.04.2026**
(21) Application number: 25315181.5
(22) Date of filing: 22.05.2025
(51) Int. Cl.: A01D 46/28, A23N 15/02

(54) **A DESTEMMER ARRANGEMENT**

(30) Priority: 10.10.2024 EP 24315465
(71) Applicant: CNH Industrial France S.A.S., 91150 Morigny-Champigny (FR)
(72) Inventor: Supiot, Guillaume, 91150 Morigny-Champigny (FR)
(74) Representative: CNH Industrial IP Department

(57) **Abstract**

The destemmer rotor (3') comprises a cylindrical shaft (7') and a plurality of destemmer fingers (20) attached to the shaft and extending away from the shaft in multiple adjacent planes perpendicular to the shaft, the fingers comprising a base (20a) and a portion (20b) extending outward from the base. At least one finger is releasably attached to the shaft by an attachment mechanism in accordance with the invention. The base of the finger is configured to be inserted manually in a radial direction in a cavity (21) provided in the shaft. The finger is locked in the inserted position via a locking pin (22). The locking pin is inserted radially in a through-opening (29) provided through the base of the finger and is configured to exert a clamping force on two or more clamping legs (28) of said base of the finger. The length of the pin is such that an end portion (22a) of the pin extends beyond the through-opening when the pin is fully inserted, while the width of said end portion exceeds the spacing between the clamping legs, so that the end portion forces the clamping legs to become clamped in a clamping portion (26) of the cavity (21). The pin comprises a head (22c) that lies against a seat when the pin is fully inserted, the head enabling to pull the pin out of the opening, so as to retrieve the end portion of the pin from the spacing between the clamping legs (28), to thereby enable releasing the finger.

## Description

### Field of the Invention

The present invention is related to mechanical harvesting and to the treatment of harvested fruit, in particular to destemmer arrangements as applicable as part of a grape harvester or as a stationary installation for treating harvested grapes.

### State of the art.

Today destemming of grapes is usually done mechanically by a destemmer arrangement which may be a standalone installation or it may be incorporated in a grape harvester. Most destemmers include rotating destemmer rotors comprising multiple fingers arranged along a rotating shaft. The grape bunches are transported on a perforated belt transporter under the rotating destemmer rotors and the interaction between the rotating fingers and the grape bunches results in removing the grapes which are then caught in a receptacle while the stems are removed as residue.

The entrance of large objects into the destemmer arrangement and/or unavoidable wear of the destemmer fingers may result in some of the fingers breaking or being otherwise damaged, hence the need to replace them with new fingers. In currently applied systems, the replacement of a limited number of destemmer fingers is a technically complex and time-consuming job which requires at least partly disassembling the rotor. It is desirable therefore to have a system that allows a quicker replacement of individual destemmer fingers.

### Summary of the invention

The invention is related to a destemmer rotor and a destemmer arrangement in accordance with the appended claims, to a self-driving grape harvester equipped with said destemmer arrangement and to methods for attaching and releasing a destemmer finger.

The destemmer rotor is configured to be rotatably mounted in a destemming arrangement, the rotor comprising a cylindrical shaft and a plurality of destemmer fingers attached to the shaft and extending away from the shaft in multiple adjacent planes perpendicular to the shaft, the fingers comprising a base and a portion extending outward from the base, wherein at least one finger is releasably attached to the shaft by an attachment mechanism in accordance with the invention. The base of the finger is configured to be inserted manually in a radial direction in a cavity provided in the shaft. 'Inserting the base' is not intended to mean the that the totality of the base is inserted in said cavity, but rather that an end portion of the base is inserted in the cavity.

Following said manual insertion, the finger is locked in the inserted position via a locking pin. The locking pin is inserted radially in a through-opening provided through the base of the finger and is configured to exert a clamping force on two or more clamping legs of said base of the finger, the clamping legs being arranged around the exit section of the through-opening. The length of the pin is such that an end portion of the pin extends beyond said exit section when the pin is fully inserted, while the width of said end portion exceeds the spacing between the clamping legs, so that the end portion forces the clamping legs apart, so as to become clamped in a clamping portion of the cavity. The pin comprises a head that lies against a seat when the pin is fully inserted, the head enabling to pull the pin out of the opening, so as to retrieve the end portion of the pin from the spacing between the clamping legs, to thereby remove the clamping force and enable releasing the finger.

At least some of the clamping legs are elastically bendable so that retrieving the end portion of the pin from the spacing between the clamping legs enables the elastic legs to return to a non-deformed state, thereby removing the clamping force. The portion of the finger that extends outward from the base of the finger may comprise a first portion that is inclined relative to a radial direction of the shaft..

Preferably all the fingers are attached by the same mechanism to the shaft. This enables a quick replacement of the destemmer fingers : releasing a finger requires the simple act of partially pulling the locking pin out of the through-opening, after which the finger can be retrieved manually from the cavity.

If the shaft is formed of discs assembled together, no full or partial disassembling of the shaft is required when one or more destemmer fingers need replacing.

### Brief description of the figures

Figure 1 illustrates a typical destemmer arrangement as presently known in the art.
Figure 2 illustrates a destemmer rotor applied in the prior art arrangement shown in Figure 1.
Figures 3a and 3b show details of the prior art destemmer rotor from two different viewpoints.
Figures 4 and 5 show a destemmer rotor according to an embodiment of the invention and a detail of the rotor as seen from a first direction.
Figures 6 and 7 show a destemmer rotor according to the same embodiment as Figures 4 and 5 and a detail of the rotor as seen from a second direction.
Figure 8a shows a cross-section of one disc of the destemmer rotor illustrated in Figures 4 to 7, with destemmer fingers in different conditions relative to the disc. Figure 8b shows one destemmer finger without the pin for attaching and releasing the finger. Figure 8c is an image of the pin separately.

### Detailed description of preferred embodiments of the invention

Preferred embodiments will now be described with reference to the drawings. The detailed description is not limiting the scope of the invention, which is defined only by the appended claims.

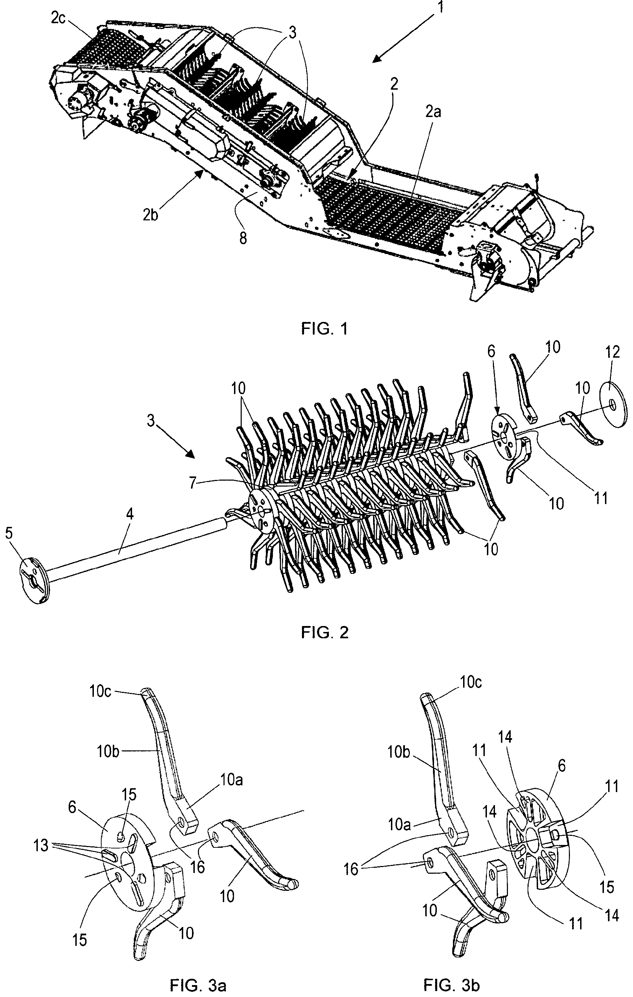

A typical destemmer arrangement 1 as presently known is shown in Figure 1. This type of arrangement is currently incorporated for example in self-driven grape harvesters produced by the applicant. The arrangement includes a movable belt 2 configured to move relative to a housing 8. The belt is formed of gratings which allow individual grapes to fall through the gratings. Bunches of harvested grapes are loaded onto the loading section 2a of the belt, and transported towards an upwardly inclined destemmer section 2b, comprising three destemmer rotors 3 mounted next to each other in the direction of the belt's movement and rotatable relative to the housing 8. In operation, a cover closes off the destemmer section, but this cover is not shown in Figure 1 in order to visualize the destemmer rotors 3. The interaction between the rotating rotors 3 and the bunches of grapes removes the grapes from the stems of the bunches. The grapes fall through the belt gratings and are collected in a container (not shown), while the stems move further up an inclined end section 2c of the belt, eventually falling over the edge of the end section, to thereby be removed from the installation.

Figure 2 shows a partly exploded view of a destemmer rotor 3 as applied in the prior art arrangement shown in Figure 1. The rotor comprises a central axle 4 provided with a fixing head 5 at one side. The axle 4 passes through aligned central openings of a series of discs 6 which are assembled together to form a central shaft 7 of the rotor. To each disc 6, three destemmer fingers 10 are attached. As best seen in the detailed views in Figures 3a and 3b, the fingers have a specific shape, comprising a base 10a attached to the shaft, a mid section 10b that is inclined relative to the radial direction of the shaft 7, and a tip section 10c inclined in the opposite sense to the mid section 10b. This shape of the fingers together with the material of the fingers is optimal for the required interaction with the grape bunches, which is to remove the grapes from the stems with no or minimal damage to the grapes. The material of the fingers 10 has a degree of flexibility while the discs 6 are formed of a more rigid material.

The detail of one disc 6 and its associated destemmer fingers 3 in Figure 3b, as seen from the opposite side compared to Figures 2 and 3a, shows how the fingers are attached to the shaft : each disc comprises three cavities 11, and the base 10a of the fingers is inserted in an axial direction in said respective cavities and held in place by the next disc or in the case of the last disc, by a closing plate 12. The discs are fitted together with the help of radially oriented protrusions 13 on one side of the disc which fit into depressions 14 on the other side of the adjacent disc, while smaller protrusions 15 at the bottom of the cavities 11 and on the opposite side of the discs are fitted into holes 16 provided in the base 10a of the fingers. Appropriate fixing means mounted to the central axle 4 and not shown in the drawings are holding the totality of the discs 6 firmly together to form the shaft 7 and said fixing means are coupled to rotational bearings and to an actuator which enables the rotation of the rotors 3 relative to the housing 8, above the advancing belt 2.

This manner of assembling the rotor 3 has the disadvantage that when a finger breaks or wears and therefore needs replacement, the fixing means holding the discs 6 together needs to be released before the finger can be removed from its cavity. This however releases also other fingers in the vicinity of the damaged finger, which makes it awkward to reassemble the rotor. This replacement method is therefore complex and time-consuming.

The present invention solves this problem by providing a different way of attaching and removing the destemmer fingers to and from the shaft.

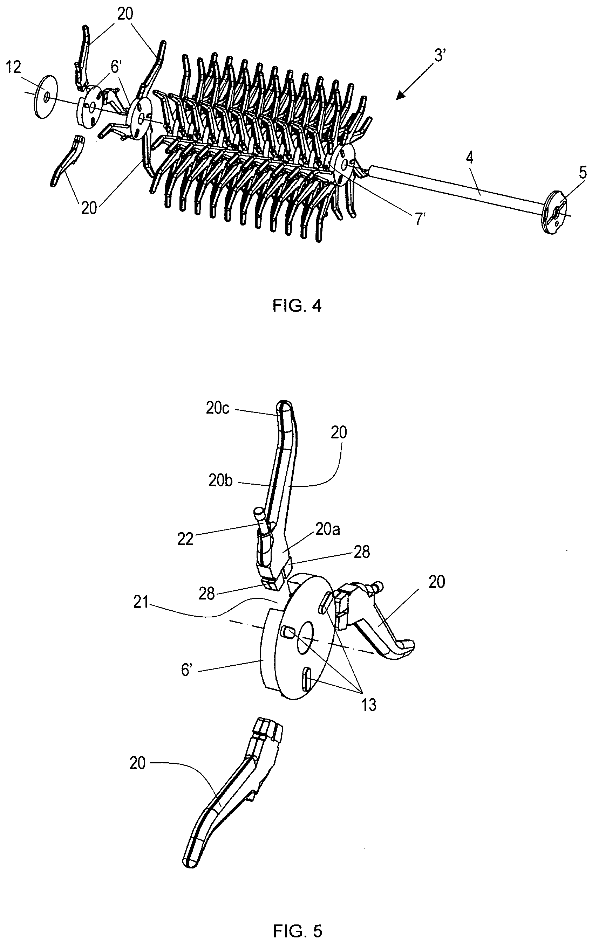

Figure 4 is a semi-exploded view of a destemmer rotor 3' according to an embodiment of the invention. The rotor again comprises a central axle 4 provided with a fixing head 5 and an end plate 12, with a plurality of discs 6' held together between the fixing head 5 and the end plate 12 when the rotor is assembled, thereby forming a shaft 7' to which a plurality of destemmer fingers 20 is attached.

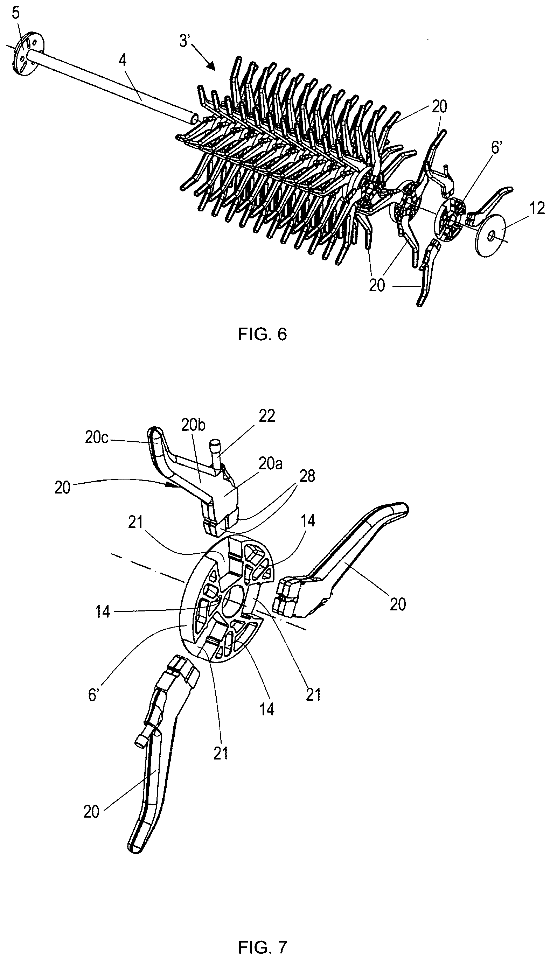

Figure 6 shows the same semi-exploded view of the rotor 3' as seen from the other side, and Figures 5 and 7 respectively show detailed semi-exploded views of one disc 6' and its associated fingers 20, as seen from the two respective directions. The protrusions 13 and depressions 14 are present, as in the prior art version of the discs.

The shape of the mid section 20b and the tip section 20c of the fingers is the same as in the existing configuration, but the base 20a of the fingers is different, and the way in which this base is coupled to the shaft 7' is also different. The discs 6' comprise again three cavities 21, but these cavities are configured to receive the base 20a of the fingers by insertion of this base in a radial direction of the shaft 7', instead of in an axial direction.

The mechanism for attaching and removing a finger 20 to and from the shaft 7' is defined by the shape of these cavities 21 and of the base 20a of the fingers, and by the fact that the mechanism further comprises a locking pin 22 that enables the attachment and removal of a finger without disassembling the shaft 7'. In fact, although the shaft 7' of the illustrated embodiment is shown to be assembled from a plurality of discs 6', the mechanism could also work with an integrally formed shaft provided with the cavities 21. The pin 22 can be formed of metal, for example inox steel, or of a plastic material of suitable strength and rigidity.

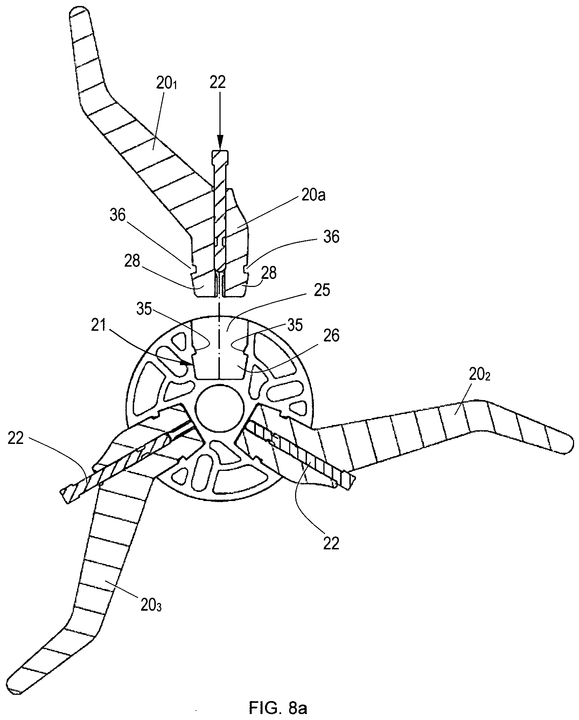

The mechanism is best seen in the cross-section view shown in Figure 8a, which shows three destemmer fingers 20₁, 20₂, 20₃. The first one 20₁ is ready to be inserted into its corresponding cavity 21. The second one 20₂ is clamped into its cavity, and the third one 20₃ is ready to be released from the cavity. The role of the pin 22 in these three states will be explained. Each cavity 21 comprises an entry portion 25 and a clamping portion 26. The base 20a of a corresponding destemmer finger comprises at its lower end a pair of clamping legs 28 configured to be inserted and clamped in the clamping portion 26 of the cavity 21.

In the embodiment shown, protrusions 35 are provided on the sidewalls of the cavity 21, said protrusions separating the entry portion 25 and the clamping portion 26 of the cavity 21. The base 20a of the fingers comprises grooves 36 configured to engage with the protrusions 35 when the base 20a is inserted in the cavity 21. The material and/or the dimensions of the base 20a and the cavity 21 and in particular of the grooves 36 and the protrusions 35 are configured so that the insertion of the base and the engaging of the protrusions 35 with the grooves 36 can be realized by manual insertion of the base. The protrusions 35 and the grooves 36 are preferred features but the invention works also without these features, so they can be regarded as optional within the wider scope of the invention. The location of the grooves and the protrusions could be reversed, i.e. protrusions 35 on the base 20a of the finger and grooves 36 on the sidewalls of the cavity 21.

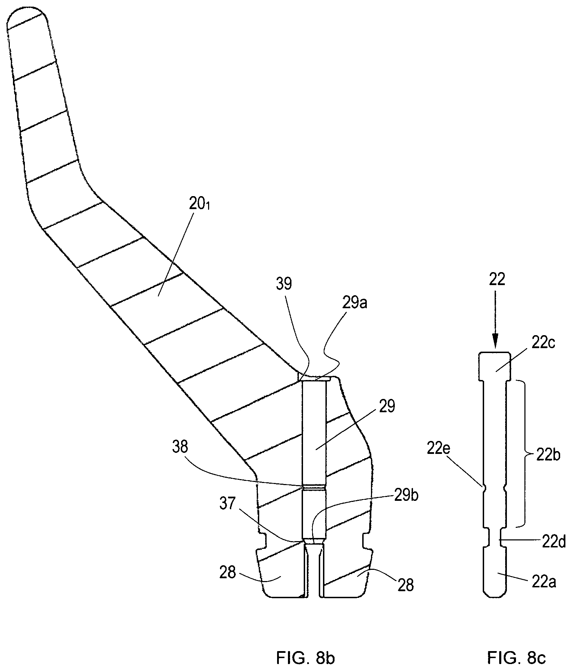

The base 20a of the fingers is provided with a longitudinal through-opening 29 oriented radially relative to the disc 6' when the finger is attached. The opening 29 is best visualized in the image in Figure 8b, showing the first destemmer finger 20₁ without the pin inserted in the through-opening 29. The opening 29 extends between an inlet section 29a and an exit section 29b. The clamping legs 28 are mounted on either side of the exit section 29b of the through-opening 29.

In the embodiment shown, the opening comprises a first throat section 37 just above the exit section 29b, and a second throat section 38 further upstream from the exit section, the term 'upstream' being related to the direction of insertion of the pin, i.e. from the inlet section 29a to the outlet section 29b. These throat sections 37 and 38 are preferred but optional elements aimed at contributing to the securing of the pin in the locked position (see further).

The pin 22, shown separately in Figure 8c, is insertable in the through-opening 29 and the shape of the pin enables clamping the finger 20 as well as releasing the finger, in the manner described hereafter.

In the embodiment shown, the pin 22 is cylindrical and comprises an end portion 22a, a main body 22b and a head 22c. A neck section 22d is located between the main body 22b and the end portion 22a. The end portion 22a and the main body 22b have the same diameter. An additional smaller neck section 22e is provided in the lower half of the main body 22. The head 22c has a larger diameter than the end portion 22a and the main body 22b.

The pin 22 fits loosely or with a small resistance (that can be easily overcome manually) in the through-opening 29, and prior to attaching the finger, the pin is inserted in the through-opening in the manner shown for the detached finger 20₁ in Figure 8a. Detached fingers 20 may actually be kept in this state, with the pin 22 inserted not further than the exit section 29b of the through opening 29.

With the pin 22 in this initial position, as is the case for the first finger 20₁ in Figure 8a, the base 20a of the finger can be inserted manually and with no or minimal resistance into the entry portion 25 of the cavity 21, and further until the protrusions 35 become lodged in the grooves 36. At this moment, the clamping legs 28 are disposed in the clamping portion 26 of the cavity without being in a locked position. The base 20a of the finger is inserted radially with respect to the disc, so this insertion can be done while the shaft 7' is assembled, i.e. all the discs 6' are assembled together.

The outer surface of the clamping legs 28 is profiled in a similar way as the inner surface of the clamping portion 26 so that the respective surfaces match. With the pin 22 in the initial position however, the clamping legs 28 fit loosely into the clamping portion 26 or can be inserted therein with little manual force.

In the embodiment shown, both clamping legs 28 are bendable elastically relative to the exit section 29b of the through-opening 29 : bending of the legs 28 is possible by a suitable bending force. Within a given displacement of the legs, the clamping legs return to their initial position when the bending force is removed. This elasticity of the clamping legs can be obtained by producing the destemmer fingers integrally from a material having a degree of flexibility. Materials presently used to produce the prior art destemmer fingers shown in Figures 1-3 are suitable for this purpose. It is however also possible according to other embodiments, that the clamping legs 28 are made from a different material from the rest of the finger, and that the clamping legs are fixed to the finger body by an adhesive or other attachment means.

Once the clamping legs 28 are lodged in the clamping portion 26, the pin 22 is pushed further down. The length of the pin exceeds the length of the through-opening 29 so that the end portion 22a of the pin extends beyond the exit section 29b of the through-opening 29 when the pin is fully inserted in the through-opening. This brings the end portion 22a of the pin in the space between the clamping legs 28. The maximum insertion of the pin is determined by the head 22c coming into contact with a seat 39 on the base 20a of the finger. The seat 39 extends around the inlet section 29a of the through-opening 29.

The diameter of the end portion 22a of the pin exceeds the spacing between the clamping legs 28 so that the full insertion of the pin forces the end portion 22a of the pin to enter the narrow space between the clamping legs 28 and thereby exert the above-described bending force on both clamping legs in opposite directions. This pushes the clamping legs 28 apart into close contact with the matching inner surfaces of the clamping portion 26 of the cavity 21. The contact force between the matching surfaces establishes a clamping force that holds the destemmer finger firmly in the cavity 21, i.e. the finger is effectively attached to the rotor shaft 7 in a locked position and ready for destemming action. Forcing the end portion 22a of the pin to enter between the clamping legs 28 may require a considerable force. The use of a hammer or equivalent impact tool may be required for this purpose.

In the locked position, the end portion 22a of the pin passes the first throat section 37 of the through-opening 29 so that the neck section 22d interlocks with said first throat section 37 of the opening. In addition, the additional neck section 22e interlocks with the second throat section 38. These interlockings contribute to the securing of the pin and thereby of the finger as a whole in the locked state. It is to be noted however that the locking of the pin is primarily realized by the fact that the end portion 22a of the pin causes the clamping legs 28 to be clamped in the clamping portion 26 of the cavity 21. The throat sections 37 and 38 of the opening and the corresponding neck sections 22d and 22e of the pin 22 are preferred but optional additional features. It is possible also to have only one throat section in the opening 29 (either 37 or 38) and one corresponding neck section on the pin 22 (either 22d or 22e).

For releasing the destemmer finger, the pin 22 is pulled out of the opening. This can be done by gripping the head 22c of the pin and pulling the pin upwards until the end portion 22a of the pin is retrieved from the spacing between the clamping legs 28, thereby removing the clamping force on the clamping legs. A conventional gripping tool can be used for this purpose, like pliers or clamps. When the clamping force is removed, the finger can be manually retrieved from the cavity 21. It is not necessary to pull the pin completely out of the through-opening. As stated, it may be convenient to maintain the pin in the opening, for example when storing the fingers separately.

It is clear from the previous description that attaching and removing an individual destemmer finger 20 to or from the shaft 7' does not require disassembling the shaft.

Some of the above-described features do not limit the scope of the invention. The illustrated shape of the matching surfaces of the clamping legs 28 and the clamping portion 26 of the cavities 21 can be different from the shapes shown in the drawings.

The pin 22 could be other than cylindrical, having for example a square cross-section, with the through-opening 29 having a matching square cross-section that enables the functionality of the pin 22 as described above. Generically, regardless of the shape of the pin's cross-section, the end portion of the pin is wider than the spacing between the clamping legs, so that the full insertion of the pin forces the clamping legs to become clamped in the clamping portion of the cavity.

According to an embodiment, a seal is installed between the pin 22 and the through-opening 29. This can for example be an O-ring mounted in a groove produced in the sidewall of the through-opening 29. The seal acts as a means for preventing dirt and liquid from entering the cavity 21.

As stated above, instead of being formed of assembled discs 6', the shaft 7' could be a solid shaft having a plurality of cavities 21 as described above, through its cylindrical outer surface, and distributed along the length of the shaft. The shaft could also be formed of several solid portions assembled together, each portion comprising cavities 21 configured to receive destemmer fingers 20 in multiple parallel planes.

The number of clamping legs 28 at the lower end of a destemmer finger 20 could be different from two. For example three clamping legs could be placed around the exit section 29b of the through-opening 29, the clamping legs being arranged at angular intervals of 120°, or four legs could be placed at intervals of 90°. The inner surface of the clamping portion 26 of the cavity is then shaped in accordance with the number of clamping legs and with the outer profile of said clamping legs.

According to embodiments, not all the clamping legs 28 are elastically bendable. An alternative to the illustrated embodiment for example could have one elastic clamping leg 28 and one rigid clamping leg 28. When correctly dimensioned, the clamping force can then be generated by pushing the elastic leg away from the rigid leg when the pin is pushed down. **It** is to be noted that pushing an elastic leg away from a rigid leg falls under the wording 'pushing the legs apart', applied in the appended claims.

The shape of the fingers 20 attached to the shaft and/or to each disc 6' could be different from the drawings. Also, the number of fingers attached to each disc and/or to the shaft as a whole could be different from the drawings.

Preferably all the fingers 20 are attached to the shaft 7' by the same attachment mechanism, as described above. The invention covers however also a rotor wherein only one or more and not all the fingers are attached to the shaft by said mechanism.

The invention is related to a destemmer arrangement, for example an arrangement similar to the one shown in Figure 1, but wherein the destemmer rotors are in accordance with the invention, for example in accordance with any of the embodiments described above.

The invention is also related to a self-driven grape harvester comprising a destemmer arrangement in accordance with any embodiment of the invention.

The invention is also related to methods for attaching and releasing a destemmer finger to and from a destemmer rotor according to any embodiment of the invention. The method steps are described above for the specific embodiment shown in the drawings, and summarized in a more generic way in the appended claims.

The invention is also related to a destemmer finger suitable for attachment to a destemmer rotor according to the invention, A destemmer finger according to the invention may be provided with the pin 22 inserted in the through-opening 29. The invention is also related to a kit of parts comprising a destemmer finger 20 and a pin 22 insertable in the through-opening 29 of the finger, in accordance with the invention.

## Claims

1. A destemmer rotor (3') for destemming bunches of grapes or similar fruit when the rotor is rotatably mounted in a destemming arrangement, the rotor comprising a cylindrical shaft (7') and a plurality of destemming fingers (20) attached to the shaft and extending away from the shaft in multiple adjacent planes perpendicular to the shaft, the fingers comprising a base (20a) and a portion (20b,20c) extending outward from the base, wherein at least one finger (20) is releasably attached to the shaft (7') by an attachment mechanism comprising :
- a cavity (21) in the cylindrical surface of the shaft, configured to receive the base (20a) of the finger by radial insertion in said cavity, the cavity comprising a clamping portion (26),
- a through-opening (29) through the base (20a) of the finger (20), the through-opening extending between an inlet section (29a) and an exit section (29b) of said through-opening, said through-opening being oriented radially relative to the shaft (7') when the base of the finger is inserted in the cavity (21),
- at least two clamping legs (28) which are part of the base (20a) of the finger, and which are located at the lower end of the base (20a) and arranged around the exit section (29b) of the through-opening, wherein the clamping legs (28) are configured to be disposed in the clamping portion (26) of the cavity (21) when the base of the finger is inserted in said cavity,
- a pin (22) that is insertable in said through-opening (29), wherein
∘ the length of the pin is such that an end portion (22a) of the pin extends beyond the exit section (29b) of the through-opening (29) when the pin is fully inserted in the through-opening,
∘ said end portion (22a) of the pin is wider than the spacing between the clamping legs (28) so that the end portion is configured to push the clamping legs (28) apart when the pin is fully inserted in the through-opening (29), thereby forcing the clamping legs to be clamped in the clamping portion (26) of the cavity by a clamping force,
∘ the pin comprises a head (22c) configured to define the full insertion of the pin by touching a seat (39) on the base (20a) of the finger, and enabling the grasping of the pin in order to retrieve the end portion (22a) of the pin from said spacing between the clamping legs (28), thereby removing the clamping force.

2. The destemmer rotor (3') according to claim 1, wherein the pin (22) comprises at least one neck section (22d,22e) configured to interlock with a throat section (37,38) provided in the through-opening (29), when the pin is fully inserted in said through-opening.

3. The destemmer rotor according to claim 1 or 2, wherein one or more grooves (36) and matching protrusions (35) are provided on the base (20a) of the finger and in the cavity (21) or vice versa, said grooves and protrusions being configured to engage with each other when the base (20a) of the finger is inserted in the cavity (21).

4. The destemmer rotor (3') according to any one of the preceding claims, wherein the shaft (7') is formed of a plurality of assembled discs (6') held together to form the shaft, at least one of said discs comprising a plurality of said cavities (21), the rotor comprising a respective plurality of destemmer fingers (20) attached to said disc by said attachment mechanism.

5. The destemmer rotor according to any one of claims 1 to 3, wherein the shaft (7') is formed of one or more solid cylindrical portions, each portion being provided with cavities configured to receive destemmer fingers extending in multiple of said adjacent planes perpendicular to the shaft.

6. The destemmer rotor (3') according to any one of the preceding claims, wherein the pin (22) is a cylindrical pin and wherein the through-opening (29) has a circular cross-section.

7. The destemmer rotor (3') according to any one of the preceding claims, wherein all the destemmer fingers (20) are attached in respective cavities (21) of the shaft (7'), by said attachment mechanism.

8. The destemmer rotor (3') according to any one of the preceding claims, wherein the destemmer finger (20) comprises at least a first portion (20b) extending outward from the base (20a) of the finger, and wherein the first portion (20b) is inclined relative to the radial direction of the shaft (7').

9. The destemmer rotor according to any one of the preceding claims, wherein a seal is provided between the pin (22) and the through-opening (29).

10. A destemmer arrangement comprising one or more destemmer rotors (3') according to any one of the preceding claims.

11. A self-driving grape harvester equipped with a destemmer arrangement according to claim 10.

12. A method for attaching a destemmer finger (20) to the shaft (7') of a destemmer rotor (3') according to any one of claims 1 to 9, the method comprising the steps of :
- inserting the base (20a) of the finger (20) into a cavity (21) of the shaft, so that the clamping legs (28) are disposed in the clamping portion (26) of the cavity,
- thereafter inserting the pin (22) fully into the through-opening (29), so that the end portion (22a) of the pin pushes the clamping legs (28) apart, to thereby clamp the clamping legs in the clamping portion (26).

13. A method for releasing a destemmer finger (20) attached by the method of claim 12, by grasping the head (22c) of the pin (22) and pulling the pin to thereby retrieve the end portion (22a) of the pin from the spacing between the clamping legs (28).

14. A destemmer finger (20) suitable for attachment to the shaft (7') of a destemmer rotor (3') according to any one of claims 1 to 9, wherein the finger comprises a pin (22) inserted in the through-opening (29) of the finger.

15. A kit of parts comprising a destemmer finger (20) suitable for attachment to the shaft (7') of a destemmer rotor (3') according to any one of claims 1 to 9, and a pin (22) insertable in the through-opening (29) of the destemmer finger (20).
